# EUROPÄISCHE PATENTSCHRIFT

(11) **EP 1 284 895 B1**
(45) Veröffentlichungstag und Bekanntmachung des Hinweises auf die Patenterteilung: **06.10.2004**
(21) Anmeldenummer: 01943131.1
(22) Anmeldetag: 18.05.2001
(51) Int. Cl.: B60R 25/02, B60R 16/00

(54) **ABZIEHSPERRE FÜR EINEN SCHLÜSSEL AUS EINEM ZÜNDANLASSSCHALTER EINES KRAFTFAHRZEUGES**
ANTI-WITHDRAWAL DEVICE FOR PREVENTING A KEY FROM BEING WITHDRAWN FROM AN IGNITION STARTER SWITCH OF AN AUTOMOBILE
DISPOSITIF ANTI-RETRAIT PERMETTANT D'EMPECHER LE RETRAIT D'UNE CLE D'UN COMMUTATEUR D'ALLUMAGE D'UN VEHICULE

(30) Priorität: 24.05.2000 DE 10025651
(43) Veröffentlichungstag der Anmeldung: 26.02.2003
(73) Patentinhaber: Delphi Technologies Inc., Troy, MI 48007 (US)
(72) Erfinder: RUDOLPH, Gerd, 55429 Aspisheim (DE); HULBERT, Thomas, 67575 Eich (DE)
(74) Vertreter: Becker, Bernd, Dipl.-Ing.
(86) Internationale Anmeldenummer: PCT/DE2001/001942
(87) Internationale Veröffentlichungsnummer: WO 2001/089888

(56) Entgegenhaltungen:
- EP-A- 0 706 919
- WO-A-98/42540

## Beschreibung

Die Erfindung bezieht sich auf eine Abziehsperre für einen Schlüssel aus einem Zündanlassschalter eines Kraftfahrzeuges mit einer mit einem Schaltkontakt eines Getriebes gekoppelten Sperreinrichtung, deren federbelasteter Sperrstift elektromagnetisch betätigbar ist, und die eine an einem Rotor des Zündanlassschalters befestigte, ein Verdrehen des Zündanlassschalters in eine Abziehstellung des Schlüssels verhindernde Sperrklinke in Abhängigkeit von einer Getriebestellung beaufschlagt.

Die DE 43 32 478 C2 offenbart eine Abziehsperre für einen Schlüssel aus einem Zündanlassschalter eines Kraftfahrzeuges mit Automatik- oder Schaltgetriebe. Die Abziehsperre arbeitet in Abhängigkeit davon, dass sich das Getriebe in einer die Antriebsräder des Kraftfahrzeugs sperrenden"Park"- oder "Sperr"-Stellung befindet, wobei eine mit einem Schaltkontakt des Getriebes verbundene elektromagnetische oder elektromechanische Sperrvorrichtung mit einer am Rotor des Zündanlassschalters ausgebildeten Sperrstufe zusammenwirkt, die die Drehung des Zündanlassschalters in die Abziehstellung des Schlüssels in Abhängigkeit von der Stellung des Getriebes sperrt. Die Sperrvorrichtung am Zündanlassschalter besteht aus einem Elektromagneten mit einem federbelasteten Tauchkern, der in der Stellung"Schlüssel gesperrt" mit einem Sperrfortsatz an seinem freien Ende in die Bewegungsbahn des Rotors mit der Sperrstufe von außen eingreift. Bei dieser Abziehsperre ist es erforderlich, das die Sperreinrichtung aufnehmende Gehäuse des Zündanlassschalters entsprechend groß zu gestalten, um die entsprechenden Bauteile montieren zu können. Im weiteren ist das Gehäuse am Mantelrohr der Lenksäule des Kraftfahrzeuges festgelegt. Darüberhinaus sind die Sperreinrichtung sowie der Zündanlassschalter elektrisch voneinander getrennt. Hierdurch entsteht bei der Montage ein erheblicher Installationsaufwand, da separate Zuleitungen sowohl für die Sperreinrichtung als auch für den Zündanlassschalter verlegt und angeschlossen werden müssen.

Ferner ist aus der EP 0 646 939 A1 ein Zündanlassschalter für ein Kraftfahrzeug bekannt, der eine Aufnahme für eine Zusatzeinrichtung, wie eine mit dem Zündanlassschalter zusammenwirkende Abziehsperre für den Schlüssel, aufweist. Das Gehäuse des Zündanlassschalters ist mit einem seitlich hervorstehenden Gehäuseansatz mit einer Aufnahmeöffnung versehen, in die ein Einschub mit der Zusatzeinrichtung eingesetzt wird. Der Einschub deckt die Aufnahmeöffnung vollständig ab und ist mittels einer lösbaren Schnapprastverbindung an dem Gehäuseansatz befestigt. Bei diesem Zündanlassschalter ist zwar eine mechanische jedoch keine elektrische Kopplung mit der Zusatzeinrichtung realisiert, weshalb ebenfalls separate Zuleitungen sowohl für den Zündanlassschalter als auch für die gegebenenfalls in dessen Gehäuse eingesetzte Zusatzeinrichtung vorgesehen werden müssen.

Das Dokument EP-A-706919 offenbart einem Zündanlassschalter mit einer Abziehsperre gemäß dem Oberbegriff des Anspruchs 1.

Es ist Aufgabe der Erfindung, eine Abziehsperre für einen Schlüssel aus einem Zündanlassschalter eines Kraftfahrzeuges der eingangs genannten Art zu schaffen, die leicht montierbar ist, eine kompakte Bauform aufweist und kostengünstig zu fertigen ist.

Erfindungsgemäß wird die Aufgabe dadurch gelöst, dass die Sperreinrichtung und der Zündanlassschalter in jeweils separate Öffnungen eines mantelrohrfesten Lenkstockschaltergehäuses eingesetzt sind, wobei die Sperreinrichtung nach dem Einsetzen in das Lenkstockschaltergehäuse mechanisch verrastet und über Anschlußkontakte mit Verbindungskontakten des Zündanlassschalters elektrisch gekoppelt ist, der über eine Leiterplatte im Lenkstockschaltergehäuse mit einem Bordnetz in Verbindung steht.

Aufgrund dieser Maßnahmen wird eine Abziehsperre zur Verfügung gestellt, die eine überaus kompakte Bauform aufweist, da sowohl die Sperreinrichtung als auch der Zündanlassschalter direkt in separate Öffnungen des Lenkstockschaltergehäuses eingesetzt sind. Die leichte Montierbarkeit ist dadurch realisiert, dass die Sperreinrichtung beim Einsetzen in das Lenkstockschaltergehäuse mit diesem verrastet und hierbei gleichzeitig die elektrische Kopplung zwischen dem Zündanlassschalter und der Sperreinrichtung hergestellt wird. Somit entfallen zusätzliche Verbindungsleitungen zur Anbindung der Abziehsperre an das Bordnetz, lediglich die Leiterplatte, die mit dem Zündanlassschalter verbunden ist, ist an das Bordnetz angeschlossen, das den Schaltkontakt des Getriebes ebenfalls umfasst. Im weiteren ist auch für den in dem Lenkstockschaltergehäuse gehaltenen Zündanlassschalter kein zusätzlich zu befestigendes Gehäuse vorzusehen.

Vorzugsweise umfasst die Sperreinrichtung ein aus einem Gehäuseunterteil und einem Gehäuseoberteil zusammengesetztes Modul-Gehäuse zur Aufnahme eines Spulenkörpers mit den stirnseitigen Anschlusskontakten, die als Gabelkontakte ausgebildet sind. Die Gabelkontakte sorgen für eine sichere und leicht herzustellende Verbindung mit den Verbindungskontakten des Zündanlassschalters. Die Unterbringung der Bauteile in dem Modul-Gehäuse der Sperreinrichtung schützt diese vor Beschädigungen bei der Handhabung, also beim Transport, bei der Lagerung und der Montage. Zusätzlich ist die Sperreinrichtung aufgrund dieses Aufbaus als separates Modul im Bedarfsfall in das Lenkstockschaltergehäuse einschiebbar, wobei die Funktionstüchtigkeit des Zündanlassschalters auch bei fehlender Sperreinrichtung gewährleistet ist.

Um die Sperreinrichtung lösbar in dem Lenkstockschaltergehäuse zu befestigen, ist zweckmäßigerweise das Gehäuseunterteil mit einem Klipsarm zur mechanischen Verrastung in dem Lenkstockschaltergehäuse versehen. Das Gehäuseunterteil wird mitsamt dem Klipsarm einstückig im Spritzgußverfahren gefertigt.

Zur Durchführung einer weitgehend werkzeuglosen und relativ einfach automatisierbaren Montage sind das Gehäuseunterteil und das Gehäuseoberteil des Modul-Gehäuses mittels Verrastungen zusammengehalten und die Gabelkontakte ragen aus einer korrespondierenden Öffnung des Gehäuseunterteils heraus.

Nach einer vorteilhaften Weiterbildung der Erfindung ist in dem Gehäuseoberteil oberhalb der Gabelkontakte eine federbelastete Sperrscheibe mit einer Klinke drehbar gelagert, wobei die Klinke aus einem Durchbruch des Modul-Gehäuses herausragt, und in einer Arretierstellung, in der das Abziehen des Schlüssels verhindert ist, zum einen mit der Sperrklinke des Zündanlassschalters und zum anderen mit dem Sperrstift zusammenwirkt. Die von dem Sperrstift beaufschlagte Klinke wirkt derart mit der am Rotor des Zündanlassschalters befestigten Sperrklinke zusammen, dass der Zündanlassschalter nicht in eine Abziehposition für den Schlüssel verdreht werden kann. Die durch den Sperrstift in der Arretierposition gehaltene Klinke verhindert lediglich die Verdrehung des Zündanlassschalters zum Abziehen des Schlüssels, eine Drehung in die gegenläufige Richtung, um beispielsweise den Motor des Kraftfahrzeuges zu starten ist möglich.

Vorteilhafterweise weist das Modul-Gehäuse im Bereich des Zündanlassschalters eine Verjüngung auf, in deren Bereich der Durchbruch für die Klinke angeordnet ist. Die Verjüngung bewirkt eine relativ nahe Anordnung des Drehpunktes der Klinke bei dem Drehpunkt der Sperrklinke und sorgt somit für günstige Hebelverhältnisse und eine geringe mechanische Belastung. Gleichzeitig ist die kompakte Bauform sichergestellt.

Um eine relativ hohe Stabilität und Funktionssicherheit mit einem geringen Materialeinsatz zu verwirklichen, ist bevorzugt die Klinke im wesentlichen rechtwinklig ausgebildet, wobei in der Arretierstellung der eine Schenkel über die Verjüngung des Modul-Gehäuses hervorsteht und eine Sperrfläche der Sperrklinke beaufschlagt und der andere Schenkel von dem Sperrstift hintergriffen wird.

Zur Bereitstellung einer wirksamen Verdrehsicherung für die Klinke ohne zusätzliche Bauteile liegt der die Sperrfläche der Sperrklinke beaufschlagende Schenkel der Klinke in der Arretierstellung an einer zugeordneten Gehäusewand an.

Nach einer vorteilhaften Ausgestaltung des Erfindungsgedankens ist die Klinke in einer Ausgangsstellung, in der der Schlüssel zum Abziehen freigegeben ist, entgegen der Wirkung einer Drehschenkelfeder von der Sperrklinke unter Anlage des entsprechenden Schenkels an derselben zwangssteuerbar. Ein äußerer Eckpunkt des der Sperrklinke zugeordneten Schenkels der Klinke liegt unter der Federwirkung stets am Umfang der Sperrklinke an. Bei Erreichen der Arretierposition verdreht die Drehschenkelfeder die Klinke in entsprechender Richtung, und der an der Sperrklinke anliegende Schenkel kommt auf der Sperrfläche zur Anlage.

Um eine in sich stabile Gestaltung zu erzielen, ist zweckmäßigerweise der Spulenkörper im wesentlichen U-förmig ausgebildet, wobei zwischen den Schenkeln eine Spule angeordnet ist, der eine Schenkel die Gabelkontakte trägt und der Sperrstift beide Schenkel sowie die Spule durchragt. Die Gabelkontakte sind vom Werkstoff des Spulenkörpers umgeben bzw. werden bei der Fertigung desselben, ebenso wie die Spule umspritzt.

Bevorzugt umfasst der Sperrstift einen Kopf und einen Betätigungsansatz für die Klinke und zwischen dem Kopf und einem Schenkel des Spulenkörpers ist eine Druckfeder auf einem Führungsansatz des Sperrstiftes angeordnet. Der metallische Sperrstift stellt somit ein relativ einfach ausgeführtes, federbelastetes Drehteil dar.

Vorteilhafterweise liegt der Kopf des Sperrstiftes in der Ausgangsstellung aufgrund der Wirkung der Druckfeder an einem Anschlag des Gehäuseoberteils an und der Betätigungsansatz gibt den zugeordneten Schenkel der Klinke der Sperrscheibe frei. Somit wird die Ausgangsstellung, in der der Schlüssel aus dem Zündanlassschalter entfernt werden kann bzw. der Zündanlassschalter in beliebige Schaltstellungen gebracht werden kann durch die Druckfeder rein mechanisch beibehalten. Darüberhinaus ist der Sperrstift zwischen dem Anschlag und dem zugeordneten Schenkel des Spulenkörpers unverlierbar gehalten.

Zweckmäßigerweise zieht die Spule in der Arretierstellung den Sperrstift entgegen der Wirkung der Druckfeder in axialer Richtung an. Um den Sperrstift anzuziehen und somit axial in Richtung der Klinke der Sperrscheibe zu verschieben, ist eine Stromversorgung der Spule in Abhängigkeit von der Getriebestellung über den Zündanlassschalter notwendig. Die Spule erhält über einen der mit den Verbindungskontakten des Zündanlassschalters gekoppelten Gabelkontakte ein Signal bezüglich der Getriebestellung, wobei der Zündanlassschalter über die Leiterplatte mit dem Schaltkontakt des Getriebes verbunden ist.

Gemäß einer weiteren vorteilhaften Ausgestaltung der Erfindung umfasst der Zündanlassschalter zumindest einen als Kontaktfeder ausgebildeten Wegkontakt, der bei eingestecktem Schlüssel eine Kontaktbahn zur Stromversorgung der Spule beaufschlagt. Somit wird der Akkumulator des Kraftfahrzeuges während des Zeitraums, in dem sich kein Schlüssel im Zündanlassschalter befindet, entlastet. Des weiteren findet keine Erwärmung der Spule statt, wodurch die Lebensdauer derselben erhöht wird.

Um den Akkumulator auch während des Betriebs des Kraftfahrzeuges zu entlasten, ist vorzugsweise die Stromversorgung der Spule von der Drehstellung des Schlüssels abhängig. Die Spule benötigt keinen Strom während der Laufzeit des Motors, sondern lediglich dann, wenn der Schlüssel und somit der Zündanlassschalter zum Ausschalten des Motors bzw. in eine Abziehposition des Schlüssels verdreht wird.

Zweckmäßigerweise nimmt das Lenkstockschaltergehäuse weitere mit der Leiterplatte gekoppelte Einzelschalter auf. Somit erfüllt die innerhalb des Lenkstockschaltergehäuses angeordnete Leiterplatte eine Vielzahl von Aufgaben.

Zur Erleichterung der Montage weist das Lenkstockschaltergehäuse Führungsmittel zum unverwechselbaren Einsetzen des Modul-Gehäuses der Sperreinrichtung auf. Die Führungsmittel schützen die Gabelkontakte der Sperreinrichtung sowie die Verbindungskontakte des Zündanlassschalters vor Beschädigung beim Einsetzen der Sperreinrichtung in das Lenkstockschaltergehäuse.

Damit eine Lagefixierung erzielt wird, ist bevorzugt zwischen den Verbindungskontakten des Zündanlassschalters ein Steg angeordnet, der in eine korrespondierende Ausnehmung zwischen den Gabelkontakten der Sperreinrichtung eingreift. Hierdurch werden die Gabelkontakte der Sperreinrichtung in ihrer Lage zu den Verbindungskontakten des Zündanlassschalters fixiert.

Um eine optimierte Ausnutzung des Platzangebotes des Lenkstockschaltergehäuses im Bereich des Zündanlassschalters sicherzustellen und eine weitere Sicherheitseinrichtung zur Verfügung zu stellen, ist vorzugsweise dem Zündanlassschalter eine in das Lenkstockschaltergehäuse eingesetzte, mit der Leiterplatte verbundene und mit einem Sender des Schlüssels in Wirkverbindung stehende Transponderspule für eine Wegfahrsperre zugeordnet.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:

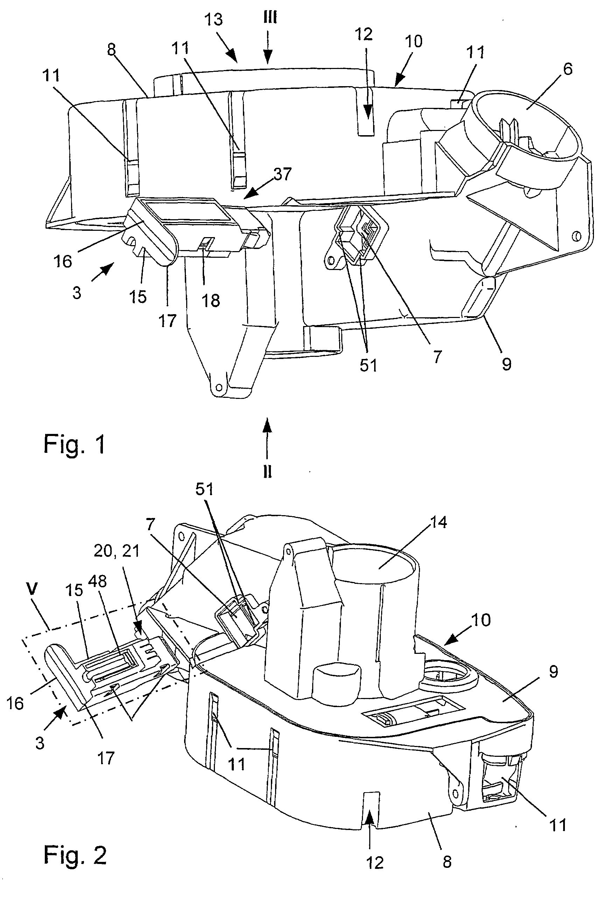

- Fig.1: eine perspektivische Darstellung eines Lenkstockschaltergehäuses für eine erfindungsgemäße Abziehsperre,
- Fig.2: eine perspektivische Darstellung gemäß Fig. 1 in Richtung des Pfeils II,

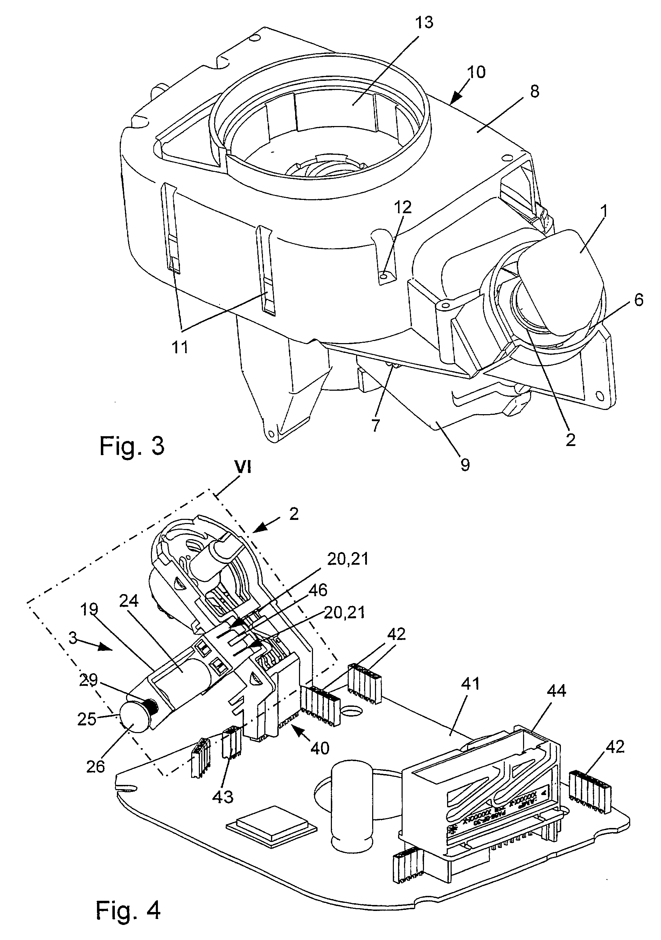

- Fig.3: eine perspektivische Darstellung gemäß Fig. 1 in Richtung des Pfeils III,
- Fig.4: eine perspektivische Darstellung einer Leiterplatte mit der Abziehsperre,

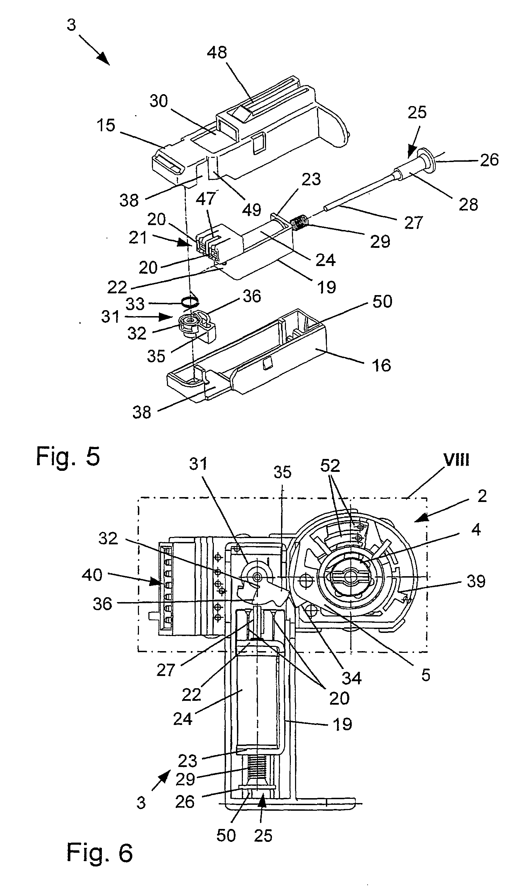

- Fig.5: eine Explosionsdarstellung einer Einzelheit V gemäß Fig. 2,
- Fig.6: eine Draufsicht auf die Einzelheit VI gemäß Fig. 4,

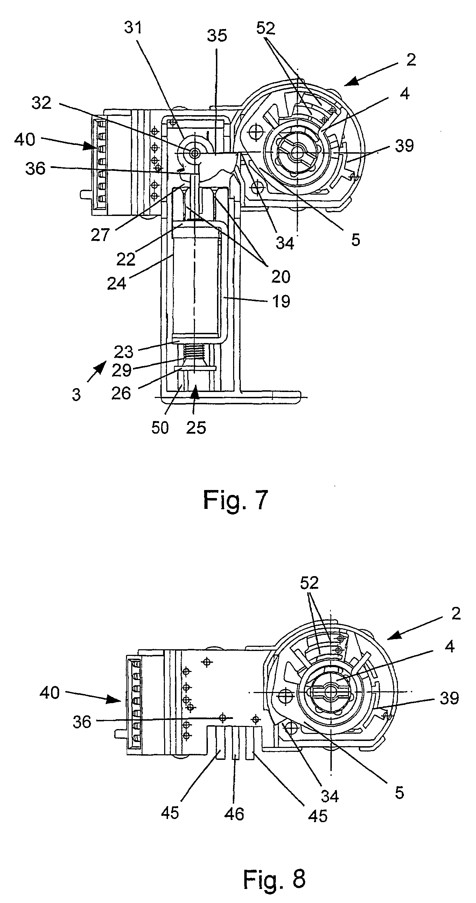

- Fig.7: eine weitere Draufsicht auf die Einzelheit VI gemäß Fig. 4 und
- Fig.8: eine teilweise Draufsicht auf eine Einzelheit VIII gemäß Fig. 6.

Die Abziehsperre für einen Schlüssel 1 aus einem Zündanlassschalter 2 eines Kraftfahrzeuges umfasst eine Sperreinrichtung 3 sowie eine an einem Rotor 4 des Zündanlassschalters 2 festgelegte Sperrklinke 5. Der Zündanlassschalter 2 und die Sperreinrichtung 3 sind in jeweils separate Öffnungen 6, 7 eines aus einem Oberteil 8 und einem Unterteil 9 zusammengesetzten Lenkstockschaltergehäuses 10 eingesetzt. Das mittels Klipsverbindungen 11 sowie in Bohrungen 12 eingesetzte Schrauben mit dem Unterteil 9 verbundene Oberteil 8 ist mit Aufnahmen 53 für als Blinker- bzw. Wischer-/ Wascherschalter ausgebildete, nicht dargestellte Einzelschalter versehen. Darüberhinaus ist in das Oberteil 8 eine Aussparung 13 für eine ebenfalls nicht dargestellte, spiralförmig aufgewickelte elektrische Verbindungseinrichtung eingelassen, wobei die Verbindungseinrichtung ein Airbagmodul mit einem Bordnetz koppelt. Zur Festlegung an einem nicht dargestellten Mantelrohr einer Lenksäule weist das Unterteil 9 des Lenkstockschaltergehäuses 10 eine entsprechend gestaltete Aufnahme 14 auf.

Die Sperreinrichtung 3 umfasst ein aus einem Gehäuseoberteil 15 und einem Gehäuseunterteil 16 zusammengesetztes Modul-Gehäuse 17. Das Gehäuseoberteil 15 und das Gehäuseunterteil 16 sind mittels Verrastungen 18 zusammengehalten und nehmen einen Spulenkörper 19 mit als Gabelkontakte 20 ausgebildeten Anschlusskontakten 21 auf.

Der Spulenkörper 19 ist U-förmig ausgebildet und hält zwischen seinen Schenkeln 22, 23 eine Spule 24. Einer der Schenkel 22 trägt die Gabelkontakte 20, die in den Spulenkörper 19 eingespritzt sind und aus einer Öffnung 30 des Gehäuseoberteils 15 herausragen. In die Spule ist ein Sperrstift 25 eingesetzt, der die Schenkel 22, 23 des Spulenkörpers 19 durchragt und einen Kopf 26 sowie einen Betätigungsansatz 27 aufweist. Zwischen dem Kopf 26 und dem Betätigungsansatz 27 ist ein Führungsansatz 28 für eine Druckfeder 29 ausgebildet. Die Druckfeder 29 stützt sich einerseits an dem zugeordneten Schenkel 23 des Spulenkörpers 19 und andererseits an dem Kopf 26 des Sperrstiftes 25 ab. In dem Gehäuseoberteil 16 ist oberhalb der im wesentlichen an der Stirnseite des Modul-Gehäuses 17 angeordneten Gabelkontakte 20 eine Sperrscheibe 31 mit angeformter Klinke 32 drehbar gelagert. Der Sperrscheibe 31 ist eine Drehschenkelfeder 33 zugeordnet und die Klinke 32 ist im wesentlichen rechtwinklig ausgebildet. Zur Beaufschlagung der dem Zündanlassschalter 2 zugeordneten, eine Sperrfläche 34 aufweisenden Sperrklinke 5 umfasst die Klinke 32 zwei Schenkel 35, 36, wobei sich der eine Schenkel 35 im Bereich der Sperrklinke 5 befindet und der andere Schenkel 36 dem Betätigungsansatz 27 des Sperrstiftes 25 zugeordnet ist. Um die Klinke 32 der Sperrscheibe 31 möglichst nahe bei der Sperrklinke 5 zu plazieren, weist das Modul-Gehäuse 17 der Sperreinrichtung 3 in diesem Bereich eine Verjüngung 37 auf und in das Modul-Gehäuse 17 ist im Bereich der Verjüngung 37 ein Durchbruch 38 für den zugeordneten Schenkel 35 eingelassen.

Der in die entsprechende Öffnung 6 des Lenkstockschaltergehäuses 10 eingesetzte Zündanlassschalter 2 umfasst ein Stanzgitter 39 mit Kontakten 40, die eine in das Lenkstockschaltergehäuse 10 eingesetzte Leiterplatte 41 kontaktieren, sowie Verbindungskontakte 45, die in die Gabelkontakte 20 der Sperreinrichtung 3 eingreifen. Zwischen den Verbindungskontakten 45 befindet sich ein Steg 46, der in eine korrespondierende Ausnehmung 47 zwischen den Gabelkontakten 20 eintaucht. Die Leiterplatte 41 weist darüber hinaus Anschlüsse 42 für die Einzelschalter und eine Steckverbindung 43 für eine im Bereich des Zündanlassschalters 2 angeordnete, mit einem Sender des Schlüssels 1 sowie mit einer Wegfahrsperre zusammenwirkende Transponderspule auf. Im weiteren ist der Leiterplatte 41 eine Kopplungseinrichtung 44 zur Verbindung mit einem Bordnetz und einem Bus-System des Kraftfahrzeuges zugeordnet. Über diese Kopplungseinrichtung 44 steht die Leiterplatte 41 und somit auch der Zündanlassschalter 3 mit einem Schaltkontakt eines Getriebes in Verbindung, wobei der Schaltkontakt Informationen bezüglich der Getriebestellung liefert.

Die Montage der Sperreinrichtung 3 erfolgt bei eingesetztem Zündanlassschalter 2 durch Einschieben der Sperreinrichtung 3 in die entsprechende Öffnung 7 des Lenkstockschaltergehäuses 10, wobei ein an dem Gehäuseunterteil 16 angeformter Klipsarm 48 für eine mechanische Verrastung in dem Lenkstockschaltergehäuse 10 sorgt und die Gabelkontakte 20 die Verbindungskontakte 45 des Zündanlassschalters 2 aufnehmen, wodurch gleichzeitig die mechanische Verbindung der Sperreinrichtung 3 mit dem Lenkstockschaltergehäuse 10 und die elektrische Verbindung der Sperreinrichtung 3 mit dem Zündanlassschalter 2 realisiert ist. Die Öffnung 7 des Lenkstockschaltergehäuses 10 weist Führungsmittel 51 zum unverwechselbaren Einsetzen des Modul-Gehäuses 17 auf.

In einer Arretierstellung der Klinke 32 der Sperreinrichtung 3, in der der Schlüssel nicht aus dem Zündanlassschalter 2 abgezogen werden kann, liegt der Schenkel 35 der Klinke 32 aufgrund der Wirkung der Drehschenkelfeder 33 an der Sperrfläche 34 der am Rotor 4 des Zündanlassschalters 2 befestigten Sperrklinke 5 an und stützt sich an einer Gehäusewand 49 des Gehäuseunterteils 16 ab. Gleichzeitig hintergreift der Betätigungsansatz 27 des Sperrstiftes 25 den Schenkel 36 der Klinke 32, wodurch diese an einer Verdrehung in die Abziehstellung des Schlüssels 1 gehindert ist. Zum Hintergreifen des Schenkels 36 wird die Spule 23 der Sperreinrichtung 3 über den Zündanlassschalter 2 mit Strom versorgt, wobei der Sperrstift 25 entgegen der Wirkung der Druckfeder 29 axial verschoben und in dieser Lage gehalten wird.

Wird nun das Getriebe in eine Park- oder Leerlauf- bzw. Neutralstellung geschaltet, dann wird die Stromversorgung der Spule 23 unterbrochen, der Sperrstift 25 kommt aufgrund der Wirkung der Druckfeder 29 mit seinem Kopf 26 an einem Anschlag 50 zur Anlage und die Klinke 32 der Sperreinrichtung 3 gelangt in eine Ausgangsstellung, in der der Schlüssel 1 aus dem Zündanlassschalter 2 abgezogen werden kann. In dieser Ausgangsstellung liegt der Schenkel 35 der Klinke 32 unter Wirkung der Drehschenkelfeder 33 am Umfang der Sperrklinke 5 an und wird durch diese zwangsgesteuert.

Um einen Akkumulator des Kraftfahrzeuges zu entlasten, umfasst der Zündanlassschalter 2 Wegkontakte 52, die bei eingestecktem Schlüssel 1 zugeordnete Kontaktbahnen des Stanzgitters 39 für die Stromversorgung der Spule 24 beaufschlagen. Da die Stromversorgung der Spule 24 lediglich in einem bestimmten, von der Drehstellung des Schlüssels 1 abhängigen Bereich erforderlich ist, überdecken die den Wegkontakten 52 zugeordneten Kontaktbahnen diesen Drehwinkel. Die Kontaktbahnen befinden sich nicht in dem Bereich, in dem der Motor des Kraftfahrzeuges läuft.

### Bezugszeichenliste

- 1.: Schlüssel
- 2.: Zündanlassschalter
- 3.: Sperreinrichtung
- 4.: Rotor
- 5.: Sperrklinke
- 6.: Öffnung
- 7.: Öffnung
- 8.: Oberteil
- 9.: Unterteil
- 10.: Lenkstockschaltergehäuse
- 11.: Klipsverbindung
- 12.: Bohrung
- 13.: Aussparung
- 14.: Aufnahme
- 15.: Gehäuseoberteil
- 16.: Gehäuseunterteil
- 17.: Modul-Gehäuse
- 18.: Verrastung
- 19.: Spulenkörper
- 20.: Gabelkontakt
- 21.: Anschlusskontakt
- 22.: Schenkel
- 23.: Schenkel
- 24.: Spule
- 25.: Sperrstift
- 26.: Kopf
- 27.: Betätigungsansatz
- 28.: Führungsansatz
- 29.: Druckfeder
- 30.: Öffnung
- 31.: Sperrscheibe
- 32.: Klinke
- 33.: Drehschenkelfeder
- 34.: Sperrfläche
- 35.: Schenkel
- 36.: Schenkel
- 37.: Verjüngung
- 38.: Durchbruch
- 39.: Stanzgitter
- 40.: Kontakt
- 41.: Leiterplatte
- 42.: Anschluss
- 43.: Steckverbindung
- 44.: Kopplungseinrichtung
- 45.: Verbindungskontakt
- 46.: Steg
- 47.: Ausnehmung
- 48.: Klipsarm
- 49.: Gehäusewand
- 50.: Anschlag
- 51.: Führungsmittel
- 52.: Wegkontakt
- 53.: Aufnahme

## Patentansprüche

1. Lenkstockschaltergehäuse mit einem Zünanlaßsschalter und einer Abziehsperre für einen Schlüssel (1) aus dem Zündanlassschalter (2) eines Kraftfahrzeuges mit einer mit einem Schaltkontakt eines Getriebes gekoppelten Sperreinrichtung (3), deren federbelasteter Sperrstift (25) elektromagnetisch betätigbar ist, und die eine an einem Rotor (4) des Zündanlassschalters (2) befestigte, ein Verdrehen des Zündanlassschalters (2) in eine Abziehstellung des Schlüssels (1) verhindernde Sperrklinke (5) in Abhängigkeit von einer Getriebestellung beaufschlagt, **dadurch gekennzeichnet,dass** die Sperreinrichtung (3) und der Zündanlassschalter (2) in jeweils separate Öffnungen (6, 7) des mantelrohrfesten Lenkstockschaltergehäuse (10) eingesetzt sind, wobei die Sperreinrichtung (3) nach dem Einsetzen in das Lenkstockschaltergehäuse (10) mechanisch verrastet und über Anschlußkontakte (21) mit Verbindungskontakten (45) des Zündanlassschalters (2) elektrisch gekoppelt ist, der über eine Leiterplatte (41) im Lenkstockschaltergehäuse (10) mit einem Bordnetz in Verbindung steht.

2. Lenkstockschaltergehäuse mit einem Zünanlaßsschalter und einer Abziehsperre nach Anspruch 1, **dadurch gekennzeichnet, dass** die Sperreinrichtung (3) ein aus einem Gehäuseunterteil (16) und einem Gehäuseoberteil (15) zusammengesetztes Modul-Gehäuse (17) zur Aufnahme eines Spulenkörpers (19) mit den stirnseitigen Anschlusskontakten (21), die als Gabelkontakte (20). ausgebildet sind, umfasst.

3. Lenkstockschaltergehäuse mit einem Zünanlaßsschalter und einer Abziehsperre nach Anspruch 2, **dadurch gekennzeichnet , dass** das Gehäuseunterteil (16) mit einem Klipsarm (48) zur mechanischen Verrastung in dem Lenkstockschaltergehäuse (10) versehen ist.

4. Lenkstockschaltergehäuse mit einem Zünanlaßsschalter und einer Abziehsperre nach den Ansprüchen 2 und 3, **dadurch gekennzeichnet , dass** das Gehäuseunterteil (16) und das Gehäuseoberteil (15) des Modul-Gehäuses (17) mittels Verrastungen (18) zusammengehalten sind und die Gabelkontakte (20) aus einer korrespondierenden Öffnung (30) des Gehäuseunterteils (16) herausragen.

5. Lenkstockschaltergehäuse mit einem Zünanlaßsschalter und einer Abziehsperre nach einem der Ansprüche 2 bis 4, **dadurch gekennzeichnet, dass** in dem Gehäuseoberteil (15) oberhalb der Gabelkontakte (20) eine federbelastete Sperrscheibe (31) mit einer Klinke (32) drehbar gelagert ist, wobei die Klinke (32) aus einem Durchbruch (38) des Modul-Gehäuses (17) herausragt, und in einer Arretierstellung, in der das Abziehen des Schlüssels (1) verhindert ist, zum einen mit der Sperrklinke (5) des Zündanlassschalters (2) und zum anderen mit dem Sperrstift (25) zusammenwirkt.

6. Lenkstockschaltergehäuse mit einem Zünanlaßsschalter und einer Abziehsperre nach Anspruch 6, **dadurch gekennzeichnet , dass** das Modul-Gehäuse (17) im Bereich des Zündanlassschalters (2) eine Verjüngung (37) aufweist, in deren Bereich der Durchbruch (38) für die Klinke (32) angeordnet ist.

7. Lenkstockschaltergehäuse mit einem Zünanlaßsschalter und einer Abziehsperre nach den Ansprüchen 6 und 7, **dadurch gekennzeichnet, dass** die Klinke (32) im wesentlichen rechtwinklig ausgebildet ist, wobei in der Arretierstellung der eine Schenkel (35) über die Verjüngung (37) des Modul-Gehäuses (17) hervorsteht und eine Sperrfläche (34) der Sperrklinke (5) beaufschlagt und der andere Schenkel (36) von dem Sperrstift (25) hintergriffen wird.

8. Lenkstockschaltergehäuse mit einem Zünanlaßsschalter und einer Abziehsperre nach Anspruch 7, **dadurch gekennzeichnet, dass** der die Sperrfläche (34) der Sperrklinke (5) beaufschlagende Schenkel (35) der Klinke (32) in der Arretierstellung an einer zugeordneten Gehäusewand (49) anliegt.

9. Lenkstockschaltergehäuse mit einem Zünanlaßsschalter und einer Abziehsperre nach einem der Ansprüche 5 bis 8, **dadurch gekennzeichnet, dass** die Klinke (32) in einer Ausgangsstellung, in der der Schlüssel (1) zum Abziehen freigegeben ist, entgegen der Wirkung einer Drehschenkelfeder (33) von der Sperrklinke (5) unter Anlage des entsprechenden Schenkels (35) an derselben zwangssteuerbar ist.

10. Lenkstockschaltergehäuse mit einem Zünanlaßsschalter und einer Abziehsperre nach einem der Ansprüche 1 bis 9, **dadurch gekennzeichnet, dass** der Spulenkörper (19) im wesentlichen U-förmig ausgebildet ist, wobei zwischen den Schenkeln (22, 23) eine Spule (24) angeordnet ist, der eine Schenkel (22) die Gabelkontakte (20) trägt und der Sperrstift (25) beide Schenkel (22, 23) sowie die Spule (24) durchragt.

11. Lenkstockschaltergehäuse mit einem Zünanlaßsschalter und einer Abziehsperre nach einem der Ansprüche 1 bis 10, **dadurch gekennzeichnet, dass** der Sperrstift (25) einen Kopf (26) und einen Betätigungsansatz (27) für die Klinke (32) umfasst und zwischen dem Kopf (26) und einem Schenkel (23) des Spulenkörpers (19) eine Druckfeder (29) auf einem Führungsansatz (28) des Sperrstiftes (25) angeordnet ist.

12. Lenkstockschaltergehäuse mit einem Zünanlaßsschalter und einer Abziehsperre nach einem der Ansprüche 1 bis 11, **dadurch gekennzeichnet, dass** der Kopf (26) des Sperrstiftes (25) in der Ausgangsstellung aufgrund der Wirkung der Druckfeder (29) an einem Anschlag (50) des Gehäuseoberteils (15) anliegt und der Betätigungsansatz (27) den zugeordneten Schenkel (36) der Klinke (32) der Sperrscheibe (31) freigibt.

13. Lenkstockschaltergehäuse mit einem Zünanlaßsschalter und einer Abziehsperre nach einem der Ansprüche 1 bis 12, **dadurch gekennzeichnet, dass** die Spule (24) in der Arretierstellung den Sperrstift (25) entgegen der Wirkung der Druckfeder (29) in axialer Richtung anzieht.

14. Lenkstockschaltergehäuse mit einem Zünanlaßsschalter und einer Abziehsperre nach einem der Ansprüche 1 bis 13, **dadurch gekennzeichnet, dass** der Zündanlassschalter (2) zumindest einen als Kontaktfeder ausgebildeten Wegkontakt (52) umfasst, der bei eingestecktem Schlüssel (1) eine Kontaktbahn zur Stromversorgung der Spule (24) beaufschlagt.

15. Lenkstockschaltergehäuse mit einem Zünanlaßsschalter und einer Abziehsperre nach Anspruch 14, **dadurch gekennzeichnet , dass** die Stromversorgung der Spule (24) von der Drehstellung des Schlüssels (1) abhängig ist.

16. Lenkstockschaltergehäuse mit einem Zünanlaßsschalter und einer Abziehsperre nach Anspruch 1, **dadurch gekennzeichnet , dass** das Lenkstockschaltergehäuse (10) weitere mit der Leiterplatte (41) gekoppelte Einzelschalter aufnimmt.

17. Lenkstockschaltergehäuse mit einem Zünanlaßsschalter und einer Abziehsperre nach einem der Ansprüche 1 bis 16, **dadurch gekennzeichnet, dass** das Lenkstockschaltergehäuse (10) Führungsmittel (51) zum unverwechselbaren Einsetzen des Modul-Gehäuses (17) der Sperreinrichtung (3) aufweist.

18. Lenkstockschaltergehäuse mit einem Zünanlaßsschalter und einer Abziehsperre nach einem der Ansprüche 1 bis 17, **dadurch gekennzeichnet, dass** zwischen den Verbindungskontakten (45) des Zündanlassschalters (2) ein Steg (46) angeordnet ist, der in eine korrespondierende Ausnehmung (47) zwischen den Gabelkontakten (20) der Sperreinrichtung (3) eingreift.

19. Lenkstockschaltergehäuse mit einem Zünanlaßsschalter und einer VAbziehsperre nach einem der Ansprüche 1 bis 18, **dadurch gekennzeichnet, dass** dem Zündanlassschalter (2) eine in das Lenkstockschaltergehäuse (10) eingesetzte, mit der Leiterplatte (41) verbundene und mit einem Sender des Schlüssels (1) in Wirkverbindung stehende Transponderspule für eine Wegfahrsperre zugeordnet ist.

## Claims

1. Steering column switch housing with an ignition and starter switch and a retraction lock for preventing retraction of a key (1) from the ignition and starter switch (2) of a motor vehicle with a locking device (3) which is coupled to a switching contact of a transmission and whose spring-loaded locking pin (25) can be actuated electromagnetically, and which, as a function of a transmission position, acts on a catch (5) which is attached to a rotor (4) of the ignition and starter switch (2) and which prevents turning of the ignition and starter switch (2) into a retraction position of the key (1), **characterised in that** the locking device (3) and the ignition and starter switch (2) are inserted in separate openings (6, 7) of the steering column switch housing (10) fixed to the steering column jacket, wherein after insertion in the steering column switch housing (10) the locking device (3) is mechanically latched, and electrically coupled by terminal contacts (21) to connecting contacts (45) of the ignition and starter switch (2) which is connected to the vehicle's electrical system via a printed circuit board (41) in the steering column switch housing (10).

2. Steering column switch housing with an ignition and starter switch and a retraction lock according to claim 1, **characterised in that** the locking device (3) includes a modular housing (17) composed of a lower housing portion (16) and an upper housing portion (15), for receiving a coil body (19) with the end terminal contacts (21) which are designed as tuning fork contacts (20).

3. Steering column switch housing with an ignition and starter switch and a retraction lock according to claim 2, **characterised in that** the lower housing portion (16) is provided with a clip arm (48) for mechanical latching in the steering column switch housing (10).

4. Steering column switch housing with an ignition and starter switch and a retraction lock according to claims 2 and 3, **characterised in that** the lower housing portion (16) and the upper housing portion (15) of the modular housing (17) are held together by latch means (18), and the tuning fork contacts (20) protrude from a corresponding opening (30) of the lower housing portion (16).

5. Steering column switch housing with an ignition and starter switch and a retraction lock according to any of claims 2 to 4, **characterised in that** in the upper housing portion (15) above the tuning fork contacts (20) is rotatably mounted a spring-loaded locking plate (31) with a pawl (32), wherein the pawl (32) protrudes from an aperture (38) of the modular housing (17), and in a locking position in which retraction of the key (1) is prevented cooperates firstly with the catch (5) of the ignition and starter switch (2) and secondly with the locking pin (25).

6. Steering column switch housing with an ignition and starter switch and a retraction lock according to claim 6, **characterised in that** the modular housing (17) has, in the region of the ignition and starter switch (2), a taper (37) in the region of which is arranged the aperture (38) for the pawl (32).

7. Steering column switch housing with an ignition and starter switch and a retraction lock according to claims 6 and 7, **characterised in that** the pawl (32) is of substantially right-angled construction, wherein in the locking position one arm (35) protrudes beyond the taper (37) of the modular housing (17) and acts on a locking surface (34) of the catch (5), and the locking pin (25) engages behind the other arm (36).

8. Steering column switch housing with an ignition and starter switch and a retraction lock according to claim 7, **characterised in that** the arm (35) of the pawl (32) which acts on the locking surface (34) of the catch (5) abuts against an associated housing wall (49) in the locking position.

9. Steering column switch housing with an ignition and starter switch and a retraction lock according to any of claims 5 to 8, **characterised in that** in a starting position in which the key (1) is to be released for retraction the pawl (32) can be forced against the action of a torsion spring (33) by the catch (5), with abutment of the corresponding arm (35) against it.

10. Steering column switch housing with an ignition and starter switch and a retraction lock according to any of claims 1 to 9, **characterised in that** the coil body (19) is substantially U-shaped, wherein between the arms (22, 23) is arranged a coil (24), one arm (22) carries the tuning fork contacts (20), and the locking pin (25) passes through both arms (22, 23) and the coil (24).

11. Steering column switch housing with an ignition and starter switch and a retraction lock according to any of claims 1 to 10, **characterised in that** the locking pin (25) includes a head (26) and an actuating attachment (27) for the pawl (32), and between the head (26) and one arm (23) of the coil body (19) a compression spring (29) is arranged on a guide attachment (28) of the locking pin (25).

12. Steering column switch housing with an ignition and starter switch and a retraction lock according to any of claims 1 to 11, **characterised in that** the head (26) of the locking pin (25) in the starting position abuts against a stop (50) of the upper housing portion (15) on account of the action of the compression spring (29), and the actuating attachment (27) releases the associated arm (36) of the pawl (32) of the locking plate (31).

13. Steering column switch housing with an ignition and starter switch and a retraction lock according to any of claims 1 to 12, **characterised in that** in the locking position the coil (24) attracts the locking pin (25) in an axial direction against the action of the compression spring (29).

14. Steering column switch housing with an ignition and starter switch and a retraction lock according to any of claims 1 to 13, **characterised in that** the ignition and starter switch (2) includes at least one displacement contact (52) which is constructed as a spring contact and which, when the key (1) is inserted, acts on a strip contact to supply current to the coil (24).

15. Steering column switch housing with an ignition and starter switch and a retraction lock according to claim 14, **characterised in that** the current supply to the coil (24) is dependent on the rotational position of the key (1).

16. Steering column switch housing with an ignition and starter switch and a retraction lock according to claim 1, **characterised in that** the steering column switch housing (10) receives further individual switches coupled to the printed circuit board (41).

17. Steering column switch housing with an ignition and starter switch and a retraction lock according to any of claims 1 to 16, **characterised in that** the steering column switch housing (10) has guide means (51) for inserting the modular housing (17) of the locking device (3) non-interchangeably.

18. Steering column switch housing with an ignition and starter switch and a retraction lock according to any of claims 1 to 17, **characterised in that** between the connecting contacts (45) of the ignition and starter switch (2) is arranged a web (46) which engages in a corresponding recess (47) between the tuning fork contacts (20) of the locking device (3).

19. Steering column switch housing with an ignition and starter switch and a retraction lock according to any of claims 1 to 18, **characterised in that** associated with the ignition and starter switch (2) is a transponder coil for an immobiliser, which is inserted in the steering column switch housing (10), connected to the printed circuit board (41) and operatively connected to a transmitter of the key (1).

## Revendications

1. Boîtier de commutateur de colonne de direction avec un contacteur d'allumage et de démarrage et un dispositif anti-retrait d'une clé (1) hors du contacteur d'allumage et de démarrage (2) d'un véhicule, avec un dispositif de blocage (3) qui est accouplé à un contact de commutation d'un mécanisme, dont la tige de blocage sollicitée élastiquement (25) est actionnable de manière électromagnétique et qui, en fonction d'une position de mécanisme, sollicite un cliquet de blocage (5), lequel est fixé à un rotor (4) du contacteur d'allumage et de démarrage (2) et s'oppose à une rotation du contacteur d'allumage et de démarrage (2) dans une position de retrait de la clé (1), **caractérisé en ce que** le dispositif de blocage (3) et le contacteur d'allumage et de démarrage (2) sont logés dans des orifices séparés (6, 7) du boîtier de commutateur de colonne de direction (10)) solidaire du tube enveloppe, le dispositif de blocage (3) une fois mis en place dans le boîtier de commutateur de colonne de direction (10) étant encliqueté mécaniquement et accouplé électriquement par l'intermédiaire de contacts de connexion (21) à des contacts de liaison (45) du contacteur d'allumage et de démarrage (2), lequel est relié à un réseau de bord par l'intermédiaire d'une plaque de circuit imprimé (41) dans le boîtier de commutateur de colonne de direction (10) .

2. Boîtier de commutateur de colonne de direction avec un contacteur d'allumage et de démarrage et un dispositif anti-retrait selon la revendication 1, **caractérisé en ce que** le dispositif de blocage (3) comprend un boîtier de module (17) composé d'une partie inférieure de boîtier (16) et d'une partie supérieure de boîtier (15) pour recevoir un corps de bobine (19) avec les contacts de connexion frontaux (21) qui sont conformés en contacts en fourche (20).

3. Boîtier de commutateur de colonne de direction avec un contacteur d'allumage et de démarrage et un dispositif anti-retrait selon la revendication 2, **caractérisé en ce que** la partie inférieure de boîtier (16) est munie d'un bras de clipsage (48) pour l'encliquetage mécanique dans le boîtier de commutateur de colonne de direction (10).

4. Boîtier de commutateur de colonne de direction avec un contacteur d'allumage et de démarrage et un dispositif anti-retrait selon les revendications 2 et 3, **caractérisé en ce que** la partie inférieure de boîtier (16) et la partie supérieure de boîtier (15) du boîtier de module (17) sont assemblées à l'aide de moyens d'encliquetage (18) et les contacts en fourche (20) sortent par un orifice correspondant (30) de la partie inférieure de boîtier (16).

5. Boîtier de commutateur de colonne de direction avec un contacteur d'allumage et de démarrage et un dispositif anti-retrait selon l'une des revendications 2 à 4, **caractérisé en ce qu'**un disque de blocage sollicité élastiquement (31) avec un cliquet (32) est monté à rotation dans la partie supérieure de boîtier (15) au-dessus des contacts en fourche (20), le cliquet (32) sortant par un passage (38) du boîtier de module (17) et, dans une position d'arrêt dans laquelle le retrait de la clé (1) est empêché, coopère d'une part avec le cliquet de blocage (5) du contacteur d'allumage et de démarrage (2) et d'autre part avec la tige de blocage (25).

6. Boîtier de commutateur de colonne de direction avec un contacteur d'allumage et de démarrage et un dispositif anti-retrait selon la revendication 6, **caractérisé en ce que** le boîtier de module (17) comporte, dans la zone du contacteur d'allumage et de démarrage (2), un rétrécissement (37), dans la zone duquel est ménagé un passage (38) pour le cliquet (32) .

7. Boîtier de commutateur de colonne de direction avec un contacteur d'allumage et de démarrage et un dispositif anti-retrait selon les revendications 6 et 7, **caractérisé en ce que** le cliquet (32) est configuré sensiblement à angle droit, dans la position d'arrêt l'une des branches (35) dépassant du rétrécissement (37) du boîtier de module (17) et sollicitant une surface de blocage (34) du cliquet de blocage (5) et l'autre branche (36) étant retenue par derrière par la tige de blocage (25).

8. Boîtier de commutateur de colonne de direction avec un contacteur d'allumage et de démarrage et un dispositif anti-retrait selon la revendication 7, **caractérisé en ce que**, dans la position d'arrêt, la branche (35) du cliquet (32) qui sollicite la surface de blocage (34) du cliquet de blocage (5) est appliquée contre une paroi de boîtier associée (49).

9. Boîtier de commutateur de colonne de direction avec un contacteur d'allumage et de démarrage et un dispositif anti-retrait selon une des revendications 5 à 8, **caractérisé en ce que**, dans une position initiale dans laquelle la clé (1) est libérée pour un retrait, le cliquet (32) peut être commandé de manière forcée, à l'encontre de l'effet d'un ressort à branches (33), par le cliquet de blocage (5) moyennant un appui de la branche correspondante (35) contre celui-ci.

10. Boîtier de commutateur de colonne de direction avec un contacteur d'allumage et de démarrage et un dispositif anti-retrait selon l'une des revendications 1 à 9, **caractérisé en ce que** le corps de bobine (19) est conformé sensiblement en U, entre les branches (22, 23) étant disposée une bobine (24), l'une des branches (22) portant les contacts en fourche (20), et la tige de blocage (25) traversant les deux branches (22, 23) ainsi que la bobine (24).

11. Boîtier de commutateur de colonne de direction avec un contacteur d'allumage et de démarrage et un dispositif anti-retrait selon une des revendications 1 à 10, **caractérisé en ce que** la tige de blocage (25) comprend une tête (26) et un embout d'actionnement (27) pour le cliquet (32), et un ressort de pression (29) étant disposé sur un embout de guidage (28) de la tige de blocage (25) entre la tête (26) et une branche (23) du corps de bobine (19).

12. Boîtier de commutateur de colonne de direction avec un contacteur d'allumage et de démarrage et un dispositif anti-retrait selon une des revendications 1 à 11, **caractérisé en ce que**, dans la position initiale, la tête (26) de la tige de blocage (25) est appliquée contre une butée (50) de la partie supérieure de boîtier (15) en raison de l'action du ressort de pression (29), et l'embout d'actionnement (27) libère la branche associée (36) du cliquet (32) du disque de blocage (31).

13. Boîtier de commutateur de colonne de direction avec un contacteur d'allumage et de démarrage et un dispositif anti-retrait selon une des revendications 1 à 12, **caractérisé en ce que**, dans la position d'arrêt, la bobine (24) actionne la tige de blocage (25) dans la direction axiale à l'encontre de l'action du ressort de pression (29).

14. Boîtier de commutateur de colonne de direction avec un contacteur d'allumage et de démarrage et un dispositif anti-retrait selon une des revendications 1 à 13, **caractérisé en ce que** le contacteur d'allumage et de démarrage (2) comprend au moins un contact glissant (52) conformé en ressort de contact qui, lorsque la clé est insérée (1), sollicite une piste de contact pour l'alimentation en courant de la bobine (24).

15. Boîtier de commutateur de colonne de direction avec un contacteur d'allumage et de démarrage et un dispositif anti-retrait selon la revendication 14, **caractérisé en ce que** l'alimentation en courant de la bobine (24) est fonction de la position de rotation de la clé (1).

16. Boîtier de commutateur de colonne de direction avec un contacteur d'allumage et de démarrage et un dispositif anti-retrait selon la revendication 1, **caractérisé en ce que** le boîtier de commutateur de colonne de direction (10) reçoit d'autres commutateurs individuels couplés à la plaque de circuit imprimé (41).

17. Boîtier de commutateur de colonne de direction avec un contacteur d'allumage et de démarrage et un dispositif anti-retrait selon une des revendications 1 à 16, **caractérisé en ce que** le boîtier de commutateur de colonne de direction (10) comprend des moyens de détrompage (51) pour l'insertion du boîtier de module (17) du dispositif de blocage (3).

18. Boîtier de commutateur de colonne de direction avec un contacteur d'allumage et de démarrage et un dispositif anti-retrait selon une des revendications 1 à 17, **caractérisé en ce qu'**entre les contacts de liaison (45) du contacteur d'allumage et de démarrage (2) est disposée une barrette (46) qui pénètre dans un évidement correspondant (47) entre les contacts en fourche (20) du dispositif de blocage (3).

19. Boîtier de commutateur de colonne de direction avec un contacteur d'allumage et de démarrage et un dispositif anti-retrait selon une des revendications 1 à 18, **caractérisé en ce qu'**au contacteur d'allumage et de démarrage (2) est associée une bobine de transpondeur pour un dispositif d'immobilisation, laquelle est insérée dans le boîtier de commutateur de colonne de direction (10), est reliée à la plaque de circuit imprimé (41) et est en liaison active avec un émetteur de la clé (1).
